# EUROPEAN PATENT APPLICATION

(11) **EP 0 628 515 A1**
(43) Date of publication of application: **14.12.1994**
(21) Application number: 93304499.2
(22) Date of filing: 10.06.1993
(51) Int. Cl.: C01F 17/00

(54) **Cerium and zirconium-containing compounds oxide and method for producing same**

(71) Applicant: SANTOKU METAL INDUSTRY CO., LTD., Kobe-shi, Hyogo-ken (JP)
(72) Inventor: Murota, Tadatoshi, Miki-shi, Hyogo-ken (JP); Yamamoto, Kazuhiro, Kobe-shi, Hyogo-ken (JP); Hasegawa, Takeshi, Kobe-shi, Hyogo-ken (JP); Aozasa, Shigeru, Amagasaki-shi, Hyogo-ken (JP)
(74) Representative: Hallybone, Huw George

(57) **Abstract**

A cerium and zirconium-containing compound oxide contains cerium and zirconium. The zirconium is contained in an amount of not less than 1 wt% as a zirconium oxide based on a total weight of the compound oxide. The compound oxide has an oxygen absorption/desorption capacity of not less than 100 µmol/g. A method for producing a cerium and zirconium-containing compound oxide involves the steps of (a) mixing a solution containing cerium ions and zirconium ions with an aqueous solution selected from an aqueous solution of ammonia, an aqueous solution of ammonium bicarbonate and an aqueous solution of oxalic acid to produce a cerium and zirconium-containing composite salt precipitate and (b) baking the precipitate at a temperature of at least 300° C or higher.

## Description

### BACKGROUND OF THE INVENTION

This invention relates to a cerium and zirconium-containing compound oxide, which may be utilized as exhaust gas purification catalysts or ceramics and which exhibits a superior oxygen absorption/desorption capacity, and a method for producing the compound oxide.

Conventionally, cerium oxide has been used in large quantities as catalysts for purification of exhaust gases or in ceramics. In the field of catalysts, for example, the properties of cerium oxide of absorbing oxygen under an oxidizing atmosphere and desorbing oxygen under a reducing atmosphere are utilized for improving the rate of purification for exhaust gases, such as HC, CO or NOₓ. On the other hand, in the field of ceramics, the properties of cerium oxide are utilized for electrically conductive ceramics, such as solid electrolytes. Such conventional cerium oxide is usually prepared by adding oxalic acid or ammonium bicarbonate to a cerium nitrate or chlorate solution and filtering, rinsing, drying and baking the resulting precipitate.

However, conventional cerium oxide prepared by the above method exhibits the oxygen absorption/desorption capacity which is of an order of 50 µmol/g or less such that it cannot absorb or desorb oxygen sufficiently. Besides, a cerium and zirconium-containing compound oxide having a superior oxygen absorption/desorption capacity has not been known to data.

### SUMMARY OF THE INVENTION

It is therefore an object of the present invention to provide a novel cerium and zirconium-containing compound oxide having a superior oxygen absorption/desorption capacity, and a method for producing the compound oxide.

It is another object of the present invention to provide a method for producing a cerium and zirconium-containing compound oxide having a superior oxygen absorption/desorption capacity easily with good reproducibility.

The above and other objects of the present invention will become apparent from the following description.

According to the present invention, there is provided a cerium and zirconium-containing compound oxide comprising cerium and zirconium, the zirconium being contained in an amount of not less than 1 wt% as a zirconium oxide based on the total weight of the compound oxide, the compound oxide having an oxygen absorption/deposition capacity of not less than 100 µmol/g.

According to the present invention, there is also provided a method for producing a cerium and zirconium-containing compound oxide comprising the steps of:
(a) mixing a solution containing cerium ions and zirconium ions with an aqueous solution selected from an aqueous solution of ammonia, an aqueous solution of ammonium bicarbonate and an aqueous solution of oxalic acid to produce a cerium and zirconium-containing composite salt precipitate; and
(b) baking the precipitate at a temperature of at least 300° C or higher.

### DESCRIPTION OF PREFERRED EMBODIMENTS

The present invention will be explained in more detail hereinbelow.

The cerium and zirconium-containing compound oxide having an oxygen absorption/desorption capacity according to the present invention, referred to hereinafter as compound oxide, has an oxygen absorption/desorption capacity of not less than 100 µmol/g and preferably in a range of from 150 µmol/g to 2000 µmol/g in a reducing or oxidizing atmosphere and at a temperature range of 400° to 700° C which induces a reducing or oxidizing reaction.

The compound oxide of the present invention contains cerium and zirconium as essential ingredients, and contains zirconium in an amount of at least 1 wt% and preferably 10 to 30 wt% as a zirconium oxide based on the total weight of the compound oxide. The content of zirconium oxide of less than 1 wt% is not desirable because the properties of the compound oxide cannot be displayed sufficiently. One or more of other rare earth metals, such as neodymium, praseodymium, lanthanum, samarium, europium, gadolinium, terbium, dysporosium, holmium, erbium and yttrium, may also be contained besides the essential ingredients of cerium and zirconium. The content of the other rare earth metal is preferably in a range of from 0 to 50 wt%, as oxides of the rare earth metals, based on the total weight of the compound oxide.

There is no particular limitation to the compound oxide of the present invention, if it exhibits the oxygen absorption/desorption capacity. Preferably, it has the shape of a sphere or a cuboid and a particle size in a range of 0.1 to 0.5 µm. The specific surface area at 800° C is preferably not less than 30 m²/g and more preferably 50 m²/g to 200 m²/g.

For preparing the compound oxide of the present invention, a solution containing cerium ions and zirconium ions is mixed with an aqueous solution of ammonia, an aqueous solution of ammonium bicarbonate or an aqueous solution of oxalic acid to produce a composite salt precipitate containing cerium and zirconium. The solution containing cerium ions and zirconium ions may be obtained by mixing an aqueous solution of cerium nitrate with an aqueous solution of zirconium nitrate. If desired, a solution containing ions of other rare earth metals, such as neodymium ions or praseodymium ions, may also be mixed into the mixture. The concentration of the solution containing cerium ions and zirconium ions is preferably in a range of from 30 to 200 g/l and more preferably in a range of from 50 to 100 g/l, as oxides of the ions. On the other hand, the proportions of the cerium ions, and zirconium ions to the optional other rare earth metal ions are preferably 1 : 0.1 to 0.8 : 0 to 0.5 and more preferably 1 : 0.1 to 0.3 : 0 to 0.1, in terms of weight ratio values as oxides. The concentration of the aqueous solution of ammonia is preferably 1 to 2N and more preferably 1 to 1.5N. The concentration of the aqueous solution of ammonium bicarbonate is preferably 50 to 200g/l and more preferably 100 to 150 g/l, while the concentration of the aqueous solution of oxalic acid is preferably 50 to 100 g/l and more preferably 50 to 60 g/l. The mixing ratio of the solution containing cerium ions and zirconium ions to the aqueous solution of ammonia, the aqueous solution of ammonium bicarbonate or the aqueous solution of oxalic acid is preferably 1 : 1 to 1 : 2 by weight ratio. Composite hydroxides, for example, are produced at this time as the composite salt precipitate.

The precipitate is baked at a temperature of at least 300° C or higher and preferably 300 to 400° C to produce the compound oxide of the present invention. If desired, the precipitate may be hydrothermally treated prior to the baking step. Such hydrothermal treatment may be carried out using an ordinary autoclave at a temperature of 100 to 135° C for a treatment time of 0.5 to 1 hour. The precipitate is not turned readily into the oxide if the baking temperature is below 300° C. The baking time duration is preferably 1 to 10 hours.

The compound oxide produced by the method of the present invention may be employed directly or admixed with nitrates of rare earth metals.

The cerium and zirconium-containing compound oxide exhibits an oxygen absorption/desorption capacity of not less than 100 µmol/g in a temperature range of 400 to 700° C and hence may be used in the field of catalysts and ceramics in place of the customary cerium oxide. Also, according to the method of the present invention, the cerium and zirconium-containing composite oxide exhibiting a superior oxygen absorption/desorption capacity may be prepared easily with good reproducibility.

### EXAMPLES OF THE INVENTION

The present invention will be explained in detail with reference to several Examples which are given only for the sake of illustration.

### Example 1

0.13 l of an aqueous solution of cerium nitrate with a cerium oxide concentration of 350 g/l prepared by dissolving into water a high purity cerium nitrate solution (purity 99.9%; manufactured by SANTOKU METAL INDUSTRY CO., LTD.) was added to 16.8 ml of an aqueous solution of zirconium nitrate with a zirconium oxide (ZrO₂) concentration of 25 wt% prepared by dissolving a zirconium nitrate solution (purity 99%; manufactured by DAICHI KIDOGENSO KK) in water, to produce a cerium and zirconium ion-containing solution containing 10 wt% of ZrO₂ based on the total weight of the compound oxide and containing the compound oxide at a concentration of 50 g/l.

To one liter of the resulting solution was added one liter of a separately prepared aqueous solution of ammonium bicarbonate containing ammonium bicarbonate at a concentration of 150 g/l to give 80 g of a precipitate of a composite carbonate containing cerium and zirconium. The resulting composite carbonate containing cerium and zirconium was baked at 300° C for five hours to produce 50 g of the compound oxide containing cerium and zirconium having a specific surface area of 90 m²/g and a specific surface area following re-baking at 800° C of 35 m²/g.

1 g of the produced compound oxide containing cerium and zirconium was charged into a tubular oven and analyzed by gas chromatography for measuring its oxygen absorption/desorption capacity under refluxing of a hydrogen gas and an oxygen gas. It was found that the oxygen absorption/desorption capacity at 400° to 700° C was 100 µmol/g and the content of zirconium oxide in the produced compound oxide was 10 wt%.

### Example 2

A composite oxide containing cerium and zirconium was prepared in the same way as in Example 1 except adding 1 liter of a 1N aqueous solution of ammonia to the cerium and zirconium ion-containing solution in place of the aqueous solution of ammonium bicarbonate, and measurement was made of the oxygen absorption/desorption capacity of the resulting compound oxide. The oxygen absorption/desorption capacity of the resulting cerium and zirconium-containing compound oxide was 100 µmol/g at 400° to 700° C. The content of zirconium oxide in the resulting composite oxide was 10 wt%.

### Example 3

A compound oxide containing cerium and zirconium was prepared in the same way as in Example 1 except adding one liter of 40 g/l of an aqueous solution of oxalic acid to the cerium and zirconium ion-containing solution in place of the aqueous solution of ammonium bicarbonate, and measurement was made of the oxygen absorption/desorption capacity of the resulting compound oxide. The oxygen absorption/desorption capacity of the resulting cerium and zirconium-containing compound oxide was 100 µmol/g at 400° to 700° C. The content of zirconium oxide in the resulting compound oxide was 10 wt%.

### Example 4

86 ml of an aqueous solution of cerium nitrate with a cerium oxide concentration of 350 g/l prepared by dissolving a high purity cerium nitrate solution in water, was added to 16.8 ml of an aqueous solution of zirconium nitrate with a zirconium oxide (ZrO₂) concentration of 25 wt% prepared by dissolving a zirconium nitrate solution in water, and to 75 ml of an aqueous solution of neodymium nitrate with a neodymium oxide concentration of 200 g/l prepared by dissolving neodymium nitrate in water, to produce a cerium, zirconium and neodymium ion-containing solution containing 10 wt% of ZrO₂ and 30 wt% of Nd₂O₃ based on the total weight of the compound oxide and containing the compound oxide at a concentration of 50g/l.

To one liter of the resulting solution was added one liter of a separately prepared aqueous solution of ammonium bicarbonate containing ammonium bicarbonate at a concentration of 150 g/l to give 80 g of a precipitate of a composite carbonate containing cerium, zirconium and neodymium. The resulting composite carbonate containing cerium, zirconium and neodymium was baked at 300° C for five hours to produce 50 g of the compound oxide containing cerium, zirconium and neodymium and having a specific surface area of 90 m²/g and a specific surface area following re-baking at 800° C of 35 m²/g.

1 g of the produced compound oxide containing cerium, zirconium and neodymium was charged into a tubular oven and analyzed by gas chromatography for measuring its oxygen absorption/desorption capacity under refluxing of a hydrogen gas and an oxygen gas. The oxygen absorption/desorption capacity of the resulting cerium, zirconium and neodymium-containing compound oxide was 100 µmol/g at 400° to 700° C. It was found that the content of zirconium oxide and that of neodymium oxide in the produced compound oxide were 10 wt% and 30 wt%, respectively.

## Claims

1. A cerium and zirconium-containing compound oxide comprising cerium and zirconium, said zirconium being contained in an amount of not less than 1 wt% as a zirconium oxide based on a total weight of the compound oxide, the compound oxide having an oxygen absorption/desorption capacity of not less than 100 µmol/g.

2. The compound oxide as claimed in claim 1 further comprising up to 50 wt% of one of more of other rare earth metals as oxides thereof based on a total weight of the compound oxide.

3. A method for producing a cerium and zirconium-containing compound oxide comprising the steps of:
(a) mixing a solution containing cerium ions and zirconium ions with an aqueous solution selected from an aqueous solution of ammonia, an aqueous solution of ammonium bicarbonate and an aqueous solution of oxalic acid to produce a cerium and zirconium-containing composite salt precipitate; and
(b) baking the precipitate at a temperature of at least 300° C or higher.

4. The method as claimed in claim 3 wherein a ratio of total weight of the cerium ions and the zirconium ions as oxides to weight of said other rare earth metal ions as oxide is 1 : 0.1 to 0.8 : 0 to 0.5.

5. The method as claimed in claim 3 wherein a mixing ratio of the solution containing cerium ions and zirconium ions to said aqueous solution is 1 : 1 to 1 : 2 by weight ratio.

6. The method as claimed in claim 3 further comprising a step of hydrothermally treating said precipitate between said steps (a) and (b).
